# EUROPÄISCHE PATENTSCHRIFT

(11) **EP 1 599 948 B1**
(45) Veröffentlichungstag und Bekanntmachung des Hinweises auf die Patenterteilung: **31.05.2006**
(21) Anmeldenummer: 03762395.6
(22) Anmeldetag: 11.06.2003
(51) Int. Cl.: H04B 3/23

(54) **Laufzeitabhängige Abschaltung der Echokompensation in einem Paketnetz**
Propagation-time-dependent switch off of the echo compensation in a packet network
Désactivation, dépendante de la durée de propagation, de la compensation d'écho dans un réseau à commutation par paquets

(30) Priorität: 02.07.2002 DE 10229680
(43) Veröffentlichungstag der Anmeldung: 30.11.2005
(73) Patentinhaber: SIEMENS AKTIENGESELLSCHAFT, 80333 München (DE)
(72) Erfinder: HOFFMANN, Klaus, 81735 München (DE)
(86) Internationale Anmeldenummer: PCT/DE2003/001948
(87) Internationale Veröffentlichungsnummer: WO 2004/006462

(56) Entgegenhaltungen:
- EP-A- 0 986 190
- EP-A- 1 286 509
- WO-A-00/25487
- WO-A-01/45291
- WO-A-99/31866
- US-A- 5 526 353

## Beschreibung

Die Erfindung betrifft ein Verfahren und ein Gateway zur Abschaltung einer Echokompensation für eine Nutzdatenverbindung in einem Paketnetz im Zuge einer Verkürzung der Paketlaufzeit.

In der Vermittlungstechnik spielen Verfahren zur Echokompensation eine wichtige Rolle für qualitativ hochwertige Sprachübertragung. Ein solches Verfahren wird in WO 0 145 291 dargestellt.

Typischerweise unterscheidet man in der Telephonie folgende drei Faktoren der Qualitätsminderung bei Sprachübertragung: Laufzeit, Signalverzerrungen und Echo. Der Effekt des Echos, d.h. der Reflexion von Sprachsignalen, hängt von der Signallaufzeit ab. Im allgemeinen wird ein Echo mit einem geringen Zeitabstand, z.B. 25 bis 30 ms, die Qualität eines Telefonats wenig beeinträchtigen. Eine spezielle Form von Echo mit einer Verzögerung von etwa 28 ms, das lokale Echo, hat sogar den gewünschten Effekt, dass der Sprecher beim Sprechen seine eigene Stimme aus der Hörmuschel vernimmt. Bei längerer Signallaufzeit geht jedoch mit einer stärkeren qualitativen Beeinträchtigung des Telefonats durch Echoeffekte einher, weshalb das Echo mit Methoden der Echokompensation unterdrückt wird.

Echokompensation ist eine etablierte Methode bei der "klassischen" Telefonie über Zeitmultiplexnetze. Für die Übertragung von Sprache über Paketnetze, wie z.B. IP (Internet Protocol) Netze, ergibt sich eine geänderte Situation im Vergleich zu Zeitmultiplexnetzen:
- Pakete werden im Paketnetz geroutet. Das Routing erfolgt anhand von Zieladressen. Bei einer Änderung des Routings (z.B. rerouting im Zuge einer Anrufumlenkung) von Paketen wird in der Regel die Zieladresse in den Paketheadern durch die Adresse des neuen Ziels ersetzt. Das Routing von Paketen zum dem neuen Ziel erfolgt unabhängig vom ursprünglichen Ziel. Die Übertragungszeit zu dem neuen Ziel kann folglich kürzer oder länger als für das ursprüngliche Ziel sein. Die Übertragung zu dem neuen Ziel kann eine Anschaltung oder eine Abschaltung der Echokompensation erfordern.
- Moderne Paketnetze erlauben "virtual trunking", d.h. das separate Führen und Übertragen von Signalisierungsnachrichten und Nutzdaten. Maßnahmen zur Echokompensationen müssen dieser komplexeren Architektur Rechnung tragen. Die das Paketnetz spezifische Verfahren zum Verbindungsaufbau und zur Verbindungssteuerung, z.B. durch Adressspezifikation im Paketheader, führen zu neuen methodischen Anforderungen im Vergleich zu Zeitmultiplexnetzen.

Die Erfindung hat zur Aufgabe die laufzeitabhängige Abschaltung von Echokompensation im Paketnetz. Diese Aufgabe wird durch ein Verfahren und ein Gateway gemäß Ansprüche 1 und 8 gelöst.

Die Erfindung betrifft die Konstellation, dass in einem Paketnetz eine für eine Verbindung vorgesehene Echokompensation abzuschalten ist, weil im Zuge einer Änderung der Paketlaufzeit bzw. der Übertragungszeit von Nutzdaten die Echokompensation nicht mehr erforderlich ist. Erfindungsgemäß wird ein Schwellenwert für die Nutzdatenübertragungszeit bzw. die Laufzeit von Nutzdaten verwendet, der eine untere Grenze für die Abschaltung der Echokompensation repräsentiert. Bei einer Änderung der Nutzdatenverbindung bzw. der Paketlaufzeit, z.B. im Rahmen einer Rufweiterleitung (Call Forwarding), wird die Bestimmung der neuen Nutzdatenübertragungszeit für geänderte Paketübertragungsstrecke veranlasst. Wenn eine Echokompensation angeschaltet ist, wird anschließend überprüft, ob die bestimmte Nutzdatenübertragungszeit der geänderten Nutzdatenverbindung den Schwellenwert für die Abschaltung der Echokompensation unterschreitet und bei Unterschreiten des Schwellenwertes die Abschaltung der Echokompensation veranlasst.

Die Weiterleitung bzw. Umleitung einer Verbindung im Paketnetz kann in einer kürzeren Übertragungszeit für Nutzdaten resultieren, denn Nutzdaten werden in der Regel nicht über das ursprüngliche Ziel zu dem neuen Ziel im Rahmen der Umlenkung geleitet. Stattdessen wird üblicherweise eine Adressinformation des neuen Ziels für das Routing verwendet, die die Adressinformation des alten Ziels ersetzt. Die Paketlaufzeit bzw. die Strecke im Rahmen des Routings zu der neuen Adresse kann kürzer sein als bei der ursprünglichen Verbindung. Die erfindungsgemäße Vorgabe einer Grenze, z.B. 32 ms, für die Abschaltung der Echokompensation liefert ein Kriterium für die Bereitstellung der Echokompensation. Bei Unterschreiten der Grenze bzw. des Schwellenwertes sollte die Echokompensation abgeschaltet werden. Eine derartige Abschaltung ist beispielsweise in dem Standard G.131 ITU-T "Control of Talker Echo" in Abschnitt 5.2.1.1 Regel 7 empfohlen: "Connections that do not require Echo Control Divices should not be fitted with them, because they increase the fault rate and are an additional maintenance burden". Ein Entscheidungskriterium für die empfohlene Abschaltung der Echokompensation bei kurzen Übertragungszeiten ist erfindungsgemäß durch die Bestimmung der Nutzdatenübertragungszeit für die geänderten Verhältnisse bzw. Verbindung und den Vergleich der neuen Nutzdatenübertragungszeit mit dem Schwellenwert gegeben. Bei Unterschreiten des Schwellenwertes durch die neue Nutzdatenübertragungszeit wird die Abschaltung der Echokompensation veranlasst. Eine bestehende Echokompensation kann so dynamisch und bedarfsabhängig unterdrückt werden.

In vielen modernen paketbasierten Netzen werden Signalisierungsnachrichten und Nutzdaten getrennt übertragen. Die Verbindungssteuerung wird dann von Steuervorrichtungen, wie z.B. Mediagatewaycontrollern, wahrgenommen (im Rahmen des IN - Intelligent Network) Konzepts spricht man im Hinblick auf diese Steuervorrichtungen von service nodes (abgekürzt SN). Die Nutzdatenübertragung erfolgt mit Hilfe von Gateways, z.B. Mediagateways, Accessgateways oder Residential Gateways, die Nutzdatenpakte bzw. Nutzdatenströme entsprechend Adressinformationen befördern. In dieser Konstellation lassen sich drei Gruppen verwendeter Protokolle unterscheiden. Auf der Signalisierungsebene werden Steuer- bzw. Signalisierungsinformationen mit Hilfe von Protokollen wie dem BICC-Protokoll (BICC: bearer independent call control), einem angepassten ISUP-Protokoll (ISUP: ISDN user part) oder dem SIP-Protokoll (SIP: session initiation protocol) ausgetauscht. Auf der Ebene der Nutzdatenübertragung verwendet man applikationsbezogene Protokolle wie das in dem RFC (Request For Comments) 1889 "Transportprotocol for realtime application" definierte RTP-Protokoll, das vor allem für Sprach- und Videoübertragung konzipiert wurde. Schließlich braucht man Protokolle für die Kommunikation zwischen diesen beiden Ebenen bzw. den Vorrichtungselementen auf der Signalisierungsebene und den Vorrichtungselementen auf der Nutzdatenebene. Dafür wird beispielsweise das MGCP (Mediagateway Control Protocol) verwendet, das in dem RFC2705 definiert ist, oder das in dem ITU-T H.248 definierte Protokoll. Auf unteren Protokollebenen kann es für die drei Gruppen von Protokollen Überschneidungen bezüglich des verwendeten Protokollstapels geben, z.B. IP-Protokoll auf der Vermittlungsebene, UDP oder TCP-Protokoll auf der Transportebene. In einer Ausgestaltung der Erfindung für getrennte Übertragung von Signalisierung und Nutzdaten im Paketnetz kommen eine Steuereinrichtung und ein Gateway bei dem erfindungsgemäßen Verfahren zur Anwendung. Dabei können Steuervorrichtung und Gateway auch mittels integrierter logischer Funktionen in einer physikalischen Vorrichtung realisiert sein. Für die Übermittlung des Schwellenwertes von der Steuervorrichtung an das Gateway kann beispielsweise das MGCP-Protokoll verwendet werden. Zu diesem Zweck wird in einer Ausgestaltung der Erfindung das MGCP-Protokoll erweitert: Im RCP-Package des MGC-Protokolls wird ein neues Ereignis (Event) vorgesehen. Dieses Ereignis kann als "Propagation Delay Decreased" definiert werden und als Parameter den Zahlenwert der Zeitdauer für den Schwellenwert umfassen. Diese Erweiterung nimmt dann entsprechend der Notation des RFC2705 folgende Form an:

| Symbol | Definition | R | S | Duration |
|---|---|---|---|---|
| PDD(###) | Propagation delay decreased | X | | |

Dabei symbolisiert "###" einen Zahlenwert für die Verzögerung bzw. Nutzdatenüberztragungszeit, z.B. in ms. Das modifizierte RTP-Package kann im Rahmen einer Notification Request oder einer Encapsulated Notification Request, z.B. im Zuge einer Create Connection Nachricht von der Steuervorrichtung an das Gateway übermittelt werden. Bei einer Änderung oder Umlenkung der Nutzdatenverbindung z.B. im Zuge einer Bearer Redirection Procedure, die in der Standardschrift ITU-T Q.1902.6 beschrieben ist, wird von dem Gateway die Nutzdatenübertragungszeit der geänderten Nutzdatenverbindung bestimmt. Die Bestimmung der Nutzdatenübertragungszeit kann in regelmäßigen Abständen erfolgen, z.B. im Sinne einer Überprüfung auf Überlast des Netzes, die sich in einer entsprechenden Erhöhung der Übertragungszeiten manifestiert. Alternativ werden Nutzdatenübertragungszeitmessungen durch Änderungen der Nutzdatenverbindung getriggert. Z.B. können im Rahmen der Prozedur bearer redirection zur Umlenkung des Nutzdatenstroms übermittelte Signalisierungsnachrichten werden die Nutzdatenübertragungszeitmessung auslösen.

Die Bestimmung der Nutzdatenübertragungszeit kann beispielsweise mit Hilfe der in dem RFC (request for comments) 1889 Kapitel 6.3.1 beschriebenen Bestimmung der Rundsendezeit für Pakete durchgeführt werden. Die Hälfte der diese Prozedur bestimmten Rundesendezeit für Pakete stellt eine Abschätzung für die Nutzdatenübertragungszeit der gesuchten Verbindung dar, wobei diese Information mit dem Jitter Buffer kombiniert wird, welcher die Varianz der Ankunft von Paketen beschreibt. Nach der Bestimmung der Nutzdatenübertragungszeit wird diese mit dem Schwellenwert verglichen und ein Unterschreiten des Schwellenwertes der Steuervorrichtung mitgeteilt. Die Steuervorrichtung veranlasst auf diese Mitteilung hin die Abschaltung der Echokompensation.

Für die beschriebenen Abläufe im Gateway kann in diesem eine Prozedur zur Ermittlung von Nutzdatenübertragungszeiten, z.B. mit Hilfe des im RFC1889 beschriebenen Verfahren zur Ermittlung der Rundsendezeit, implementiert sein. Zudem sind Programmstrukturen vonnöten, die eine Vergleichung von ermittelten Nutzdatenübertragungszeiten mit dem durch die Steuervorrichtung angegebenen Schwellenwert erlauben. Die Abschaltung der Echokompensation kann auch durch das Gateway vorgenommen werden, wenn sich die Echokompensation im Zuständigkeitsbereich des Gateways befindet. Bei Anwendung des MGC-Protokolls kann diese Abschaltung durch das Gateway mit Hilfe der MDCX-Anweisung (MDCX: Modify connection), die von der Steuervorrichtung an das Gateway übertragen wird, veranlasst werden.

Eine andere Situation ergibt sich, wenn die Echokompensation nicht im Zuständigkeitsbereich der Steuervorrichtung bzw. eines durch die Steuervorrichtung gesteuerten Gateways befindet. In diesem Fall lässt sich mit Hilfe der Enhanced Echo Control Procedure, die in Kapitel 2.7.2 des ITU-T-Standards Q.764 beschrieben ist, der Abschaltungswunsch an eine andere Steuervorrichtung signalisieren. Dies funktioniert mit Hilfe des Sendens einer NRM (Network Resource Management) Nachricht mittels des auf der Steuerebene verwendeten Protokolls, z.B. ISUP oder BICC. Entsprechend Tabelle 46 des ITU-T-Standards Q.763 "signalling system no.7 - ISDN user part formats and codes" kann die NRM Nachricht einen "echo control information" Parameter beinhalten, d.h. zum Transport von Steuerinformation für die Echokompensation verwendet werden.

Der Adressat der NRM-Nachricht ist eine Steuervorrichtung, die direkt oder indirekt, d.h. über ein Gateway Zugriff auf die abzuschaltende Echokompensation hat. Auf Erhalt der NRM-Nachricht hin veranlasst diese Steuervorrichtung die gewünschte Abschaltung.

Die Erfindung wird im Folgenden anhand von Figuren im Rahmen von Ausführungsbeispielen näher erläutert. Es zeigen
- Fig. 1: Ein System für eine über ein Paketnetz geleitete Verbindung von PSTN-Teilnehmern mit getrennter Übertragung von Signalisierungsnachrichten und Nutzdaten
- Fig. 2: Umlenkung des A-seitigen Nutzdatenstromes zu einem IVR-Server (IVR : interactive voice response)

Dabei bezeichnen gleiche Bezugszeichen gleiche Elemente.

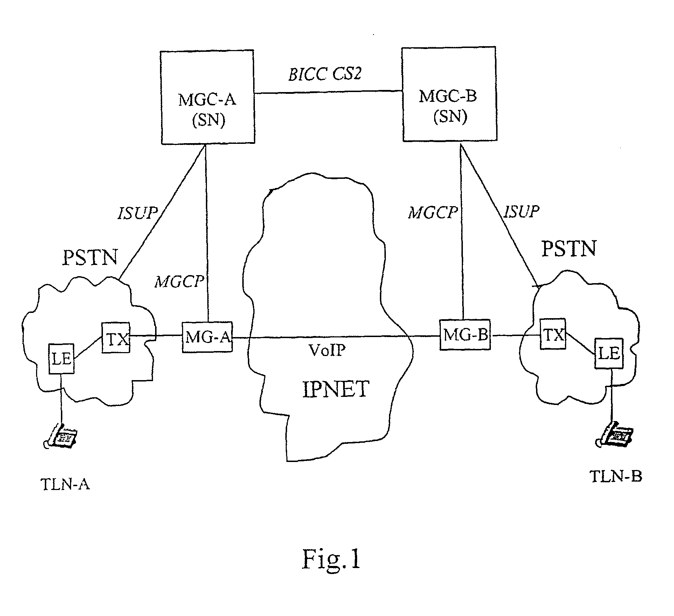

In Figur 1 ist eine typische über ein Paketnetz IPNET geführte Sprachverbindung zweier PSTN-Teilnehmer TLN-A und TLN-B dargestellt. Dabei werden Nutzdaten und Signalisierungsnachrichten entsprechend dem SS7-System (SS7: Signaling System No.7) getrennt übertragen. Die Endteilnehmer TLN-A und TLN-B sind jeweils über teilnehmernahe Endvermittlungsstellen LE an PSTN (Public Switched Telephone Network) Netz angebunden. Über eine oder mehrere Transitvermittlungsstellen TX des PSTN-Netzes können Nutzdaten zu Netzzugangs- bzw. Netzübergangsvorrichtungen MG-A bzw. MG-B (MG: Mediagateway) herangeführt werden. Von dem A-Teilnehmer TLN-A an den B-Teilnehmer TLN-B übertragene Nutzdaten werden in den Netzzugangseinrichtungen MG-A bzw. MG-B für Sprachübertragung über das Paketnetz IPNET angepasst. Für ein auf der Grundlage des IP (Internet Protocol) Protokolls operierenden Paketnetzes spricht man in Bezug auf Sprachübertragung von Voice over IP, abgekürzt VoIP. Die Signalisierung für den Aufbau der Verbindung zwischen den beiden Teilnehmern TLN-A und TLN-B wird getrennt von der Nutzdatenübertragung gehandhabt. Aus dem PSTN-Netz im Rahmen der Verbindungsteuerung übertragene Signalisierungsnachrichten werden mit Hilfe des ISUP (ISDN User Part) Protokolls an die Steuervorrichtung bzw. den Mediagateway-Controller MGC-A übermittelt. Die Steuervorrichtung MGC-A veranlasst durch Übersendung von Steuernachrichten mit Hilfe des MGCP Protokolls an die Netzzugangszurichtung MG-A die Steuerung der Übertragung von Nutzdaten über das Paketnetz IPNET. Bei einem System, das entsprechend einer IN (Intellegent Network) Architektur ausgebildet ist, spricht man in Hinsicht auf die Steuervorrichtung MGC-A bzw. MGC-B von service nodes (abgekürzt SN). Für den Verbindungsaufbau bzw. die Verbindungssteuerung zwischen den Endteilnehmern TLN-A und TLN-B werden Signalisierungsnachrichten zwischen der Steuervorrichtung MGC-A und der Steuervorrichtung MGC-B, die die B-seitige Netzzugangsvorrichtung MG-B steuert, ausgetauscht. Dieser Nachrichtenaustausch wird beispielsweise mit Hilfe des BICC CS2 (Barer Independent Call Control - Capability Set Nr. 2) Protokolls durchgeführt. Von der B-seitigen Steuervorrichtung MGC-B können dann mit Hilfe des ISUP-Protokolls Signalisierungsnachrichten an das B-seitige PSTN-Netz weiter gegeben werden.

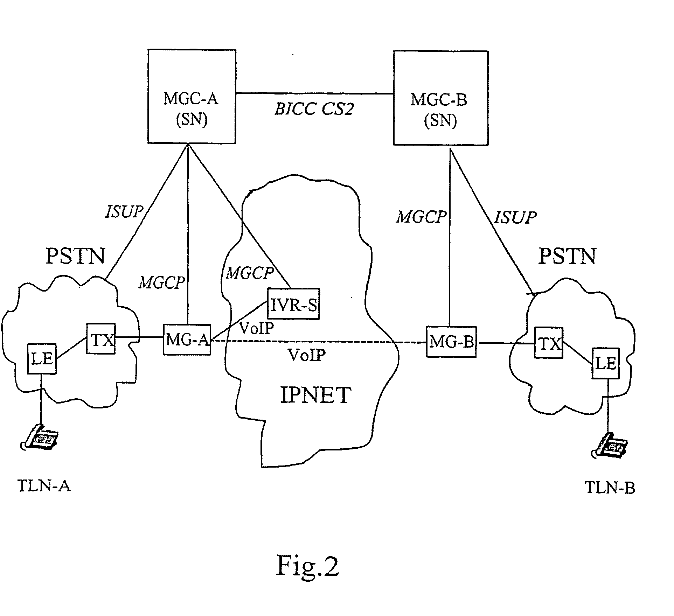

Figur 2 zeigt das System von Figur 1, wobei als zusätzliches Vorrichtungselement ein IVR (Interactive Voice Response) Server IVR-S dargestellt ist. Dieser IVR-Server wird mit Hilfe des MGC-Protokolls von der Steuervorrichtung MGC-A gesteuert. IVR-Server dienen der Bereitstellung von sprachbezogenen Dienstmerkmalen, wie z.B. das Anlegen von Ansagetexten oder der Bereitstellung von automatisierten Dialogabläufen. Beispielsweise wird im Rahmen eines Verbindungsaufbauwunsches des Teilnehmers TLN-A mit dem B-Teilnehmer TLN-B die Nichterreichbarkeit des B-Teilnehmers TLN-B festgestellt und eine von dem IVR-Server IVR-S bereitgestellte Ansagefunktion aktiviert, die den A-Teilnehmer TLN-A über die Nichterreichbarkeit des B-Teilnehmers informiert. Bei einer fehlerhaft eingegebenen Rufnummerninformation wird für den A-Teilnehmer TLN-A von dem IVR-Server IVR-S z.B. der Text "kein Anschluss unter dieser Nummer" ausgegeben. Für einen Zugriff auf IVR Ressourcen, die durch den IVR-Server IVR-S bereitgestellt werden, muss die Nutzdatenverbindung zu dem IVR-Server IVR-S umgelenkt werden. Dafür steht beispielsweise die Prozedur Bearer Redirection zur Verfügung, die in der Standardschrift ITU-Q.1902.6 beschrieben ist. Im Rahmen dieser Prozedur wird die Nutzdatenverbindung zwischen den Netzzugangseinrichtungen MG-A und MG-B ersetzt durch die Nutzdatenverbindung zwischen der Netzzugangseinrichtung MG-A und dem IVR-Server IVR-S. Diese Veränderung des Pfades der Nutzdaten führt zu einer Änderung des Übertragungsweges und damit zu einer neuen Situation hinsichtlich der Notwendigkeit einer Echokompensation. Beispielsweise war für die Nutzdatenverbindung zwischen MG-A und MG-B (in der Figur 2 gestrichelt gezeichnet) eine Echokompensation notwendig, die für die Nutzdatenverbindung zwischen der Zugangseinrichtung MG-A und dem IVR-Server IVR-S nicht sachdienlich ist. Erfindungsgemäß drückt sich das durch das Unterschreiten eines Schwellenwertes für die Nutzdatenübertragungszeit aus. Eine derartige Nutzdatenumleitung, die eine Abspaltung der Echokompensation erfordert, wird in der Netzzugangseinrichtung MG-A detektiert und an die Steuervorrichtung MGC-A gemeldet. Für die Detektierung von Änderung der Nutzdatenverbindung wird die Netzzugangseinrichtung MG-A durch die Steuervorrichtung MGC-A im Rahmen des Verbindungsaufbaus oder während der Verbindung programmiert bzw. konfiguriert. Bei Verwendung des MGCP-Protokolls entsprechend des Standards RFC2705 können darin beschriebene Prozeduren für die Anweisung an die Netzzugangseinrichtung MGC-A angewendet werden. Beispielsweise wird die Anweisung (im Englischen Command) Notification Request verwendet. Diese Anweisung kann zur Anwendung kommen, um Gateways zur Übersendung von Benachrichtigungen (im Englischen Notification) über das Auftreten bestimmter Ereignisse an den zuständigen Gatewaycontroller zu veranlassen. Der Notification Request enthält eine Liste von Anweisungen (im Standard "Requested Events") zur Ausführung durch ein Mediagateway. Im Rahmen des Protokolls sind sogenannte Event Packages definiert, die Listen von Events (Ereignissen) und Actions (Vorgängen) spezifizieren, die detektiert bzw. durchgeführt werden können. Ein derartiges Package ist das sogenannte RTP (Real Time Protocol) Package, das für die Steuerung bzw. Kontrolle von RTP-Strömen verwendet wird. In diesem Package wird ein neuer Requested Event mit Namen Propagation Delay Decreased eingeführt, der als Parameter den Schwellenwert für die Abschaltung von Echosperren beinhaltet. Das RTP-Package kann als Teil des Notification Requests an die Netzzugangseinrichtung MG-A übermittelt werden. Auf Erhalt des Notification Requests hin detektiert die Netzzugangseinrichtung MG-A Veränderung bei der Netzdatenübertragung und signalisiert an die Steuervorrichtung MGC-A ein Unterschreiten des Schwellenwertes. Der Notification Request kann auch als optionales Element der Create Connection Anweisung in der Form eines Encapsulated Notification Requests, typischerweise im Rahmen des Verbindungsaufbaus von der Steuervorrichtung MGC-A an die Netzzugangseinrichtung MG-A übermittelt werden. Alternativ wird der Notification Request - typischerweise wenn eine Verbindung bereits steht - als selbständiger Befehl bzw. selbständige Anweisung an die Netzzugangseinrichtung MGC-A übermittelt. Bei Verwendung einer Create Connection Anweisung wird der durch diese Anweisung eingeleitete Verbindungsaufbau gleichzeitig mit der durch den Notification Request angeforderten Maßnahmen zur Detektierung von Veränderung bei der Nutzdatenübertragung gleichzeitig durchgeführt.

Veränderungen bei der Nutzdatenübertragung, wie beispielsweise in Figur 1 gezeigt, führen zur Laufzeitmessung der neu entstehenden Nutzdatenverbindung (in Figur 2 zwischen Netzzugangseinrichtung MG-A und IVR-Server IVR-S anstatt der gestrichelt gezeichneten Verbindung zwischen den Netzzugangseinrichtungen MG-A und MG-B). Die Messung der Übertragungszeit wird beispielsweise mit Hilfe des in dem RFC1889 Kapitel 6.3.1 beschriebenen Messung der Rundsendezeitverzögerung (im Standard "roundtripdelay" genannt) vorgenommen. Dabei werden Pakete an das neue Ziel bzw. den neuen Endpunkt gesendet und im Anschluss wieder zurückübertragen. Aus dem Timestamp bzw. den bei den neuen zieleingetragenen Zeitinformationen kann die Zeitdauer für die Rundsendung des Paketes ermittelt werden. Um den Einfluss von Streuungen bei der Übertragungszeit von Paketen zu reduzieren, wird üblicherweise zusätzlich der Jitterbuffer, welcher die Varianz der Ankunft von Paket beschreibt, verwendet. Der so erhaltene Wert für die Rundsendeverzögerung wird durch zwei dividiert und mit dem Schwellenwert für die Abschaltung der Echokompensation verglichen. Falls die Laufzeit der Pakete das Kriterium für die Abschaltung der Echokompensation erfüllen, wird die Steuervorrichtung MGC-A durch die Netzzugangsvorrichtung MG-A benachrichtigt. Eine Ausschaltung von Echokompensationen bei der Netzzugangseinrichtung MG-A kann durch die MGCP-Anweisung Multify Connection (MDCX), die Local Connection Options als Parameter annimmt, verwendet werden. Die Local Connection Option enthalten ein Feld "Usage of Echo Cancellation", das mit Hilfe der Werte "on" "und" "of" die Aus- bzw. Einschaltung der Echokompensation ermöglicht.

Erfindungsgemäß können auch Echokompensatoren abgeschaltet werden, die nicht im Bereich des Mediagateways liegen, das für die Detektierung der Nutzdatenübertragungszeit zuständig ist. In Abwandlung des obigen Ausführungsbeispiels werde die Messung der Nutzdatenübertragungszeit von dem B-seitigen Mediagateway MG-B durchgeführt. Beispielsweise wird durch das B-seitige Mediagateway festgestellt, dass aufgrund von Netzschwankungen die vom A-seitigen Mediagateway MG-A übermittelten Pakete schneller ankommen als vorher und dass der Echokompensator beim A-seitigen Mediagateway abzuschalten ist. Im Gegensatz zu dem in Figur 2 beschriebenen Fall kann bei Detektion der Nutzdatenlaufzeit im B-seitigen Mediagateway MG-B die Ausschaltung der Echokompensation nicht mehr direkt durch von der Steuervorrichtung MGC-A übertragene Steuerbefehle durchgeführt werden. Stattdessen wird von der Steuervorrichtung MGC-B an die A-seitige Steuervorrichtung MGC-A signalisiert, dass die Echokompensation auszuschalten ist. Die Echokompensation kann dann von der Steuervorrichtung MGC-A wieder durch MGCP-Befehle bzw. Anweisungen an das Mediagateway MG-A bewirkt werden. Für die Signalisierung der Überschreitung des Schwellenwertes bzw. der Notwendigkeit zur Abschaltung der Echokompensation von der Netzzugangseinrichtung bzw. Steuervorrichtung MGC-B an die Steuervorrichtung MGC-A können Prozeduren verwendet werden, die im den Standardcode Q.764 "Signalling System Nr. 7 - ISDN User Part Signalling Procedures" in Kapitel 2.7.2 "Enhanced Echo Control Signalling Procedures" dargestellt sind. Mit Hilfe einer NRM (Network Resource Management) Nachricht, die z.B. auf Erhalt eines ECRF (Echo Control Request Forward) Events generiert wird, wird die Abschaltung der Echokompensation durch die Steuervorrichtung MGC-A getriggert, d.h. die Steuervorrichtung MGC-A wird zum Senden einer MGCP-Anweisung zur Abschaltung der Echokompensation an das Mediagateway MG-A veranlasst.

## Patentansprüche

1. Verfahren zur Abschaltung einer Echokompensation für eine Nutzdatenverbindung in einem Paketnetz (IPNET) im Falle einer Verkürzung der Paketlaufzeit, bei dem
- ein Schwellenwert für die Nutzdatenübertragungszeit verwendet wird, der eine untere Grenze für die Abschaltung der Echokompensation darstellt,
- bei einer Änderung der Nutzdatenverbindung die Bestimmung der Nutzdatenübertragungszeit der geänderten Nutzdatenverbindung ausgelöst wird,
- bei angeschalteter Echokompensation überprüft wird, ob die Nutzdatenübertragungszeit der geänderten Nutzdatenverbindung den Schwellenwert unterschreitet, und
- bei Unterschreiten des Schwellenwertes hin die Abschaltung der Echokompensation mittels einer Steuervorrichtung (MGC) und eines Gateways (MG) veranlasst wird, wobei
-- von der Steuervorrichtung (MGC) an das Gateway (MG) der Schwellenwert für die Nutzdatenübertragungszeit übermittelt wird, der eine untere Grenze für die Anschaltung der Echokompensation darstellt,
-- bei einer Änderung der Nutzdatenverbindung durch das Gateway (MG) die Bestimmung der Nutzdatenübertragungszeit der geänderten Nutzdatenverbindung veranlasst wird,
-- bei angeschalteter Echokompensation von dem Gateway (MG) überprüft wird, ob die Nutzdatenübertragungszeit der geänderten Nutzdatenverbindung den Schwellenwert unterschreitet,
-- von dem Gateway (MG) die Steuervorrichtung (MGC) über ein Unterschreiten des Schwellenwertes benachrichtigt wird, und
-- von der Steuervorrichtung (MGC) auf die Benachrichtigung über das Unterschreiten des Schwellenwertes hin die Abschaltung der Echokompensation veranlasst wird.

2. Verfahren nach Anspruch 1,
**dadurch gekennzeichnet,**
- **dass** von der Steuervorrichtung (MGC) an das Gateway (MG) im Zuge der Übermittlung des Schwellenwertes mittels der NotificationRequest Anweisung des MGCP Protokolls das Gateway (MG) veranlasst wird, bei einer Änderung der Nutzdatenverbindung, die ein Unterschreiten des Schwellenwertes bedingt, die Steuervorrichtung (MGC) zu benachrichtigen.

3. Verfahren nach Anspruch 1 oder 2,
**dadurch gekennzeichnet,**
- **dass** die Übermittlung des Schwellenwertes mittels eines für das MGCP Protokoll neu eingeführten Ereignisses im RTP Package des MGCP Protokolls vorgenommen wird.

4. Verfahren nach einem der vorhergehenden Ansprüche,
**dadurch gekennzeichnet,**
- **dass** Nutzdatenübertragungszeiten mit Hilfe der Rundsendezeiten von Nachrichten ermittelt werden.

5. Verfahren nach einem der vorhergehenden Ansprüche 1 bis 4,
**dadurch gekennzeichnet,**
- **dass** von der Steuervorrichtung (MGC) auf die Benachrichtigung über das Unterschreiten des Schwellenwertes hin die Abschaltung der Echokompensation veranlasst wird, indem die Steuervorrichtung (MGC) durch das Senden der MGCP Nachricht MDCX an das Gateway (MG) die Abschaltung der Echokompensation durch das Gateway (MG) bewirkt.

6. Verfahren nach einem der vorhergehenden Ansprüche,
**dadurch gekennzeichnet,**
- **dass** im Falle der Abschaltung einer Echokompensation im Zuständigkeitsbereich einer Kontrollinstanz für die Abschaltung der Echokompensation eine NRM Nachricht an eine Kontrollinstanz gesendet wird, und
- **dass** durch das Senden der NRM Nachricht das Ausschalten einer Echokompensation durch die Kontrollinstanz bewirkt wird.

7. Verfahren nach einem der vorhergehenden Ansprüche,
**dadurch gekennzeichnet,**
- **dass** es sich bei dem Paketnetz (IPNET) um ein IP Netz oder ein ATM asynchronous transfer mode Netz handelt.

8. Gateway (MG) zur Durchführung eines Verfahrens nach einem der vorhergehenden Ansprüche
- mit Mittel zur Ermittlung von Nutzdatenübertragungszeiten im Paketnetz (IPNET) und
- mit einer Programmstruktur zum Vergleichen von ermittelten Nutzdatenübertragungszeiten mit einem von einen Steuervorrichtung (MGC) übermittelten Schwellenwert, der eine untere Grenze für die Anschaltung der Echokompensation darstelle,
- mit Mitteln zur Benachrichtigung der Steuervorrichtung über ein Unterschreitens des Schwellenwerte,
- mit Mitteln zum Abschalten der Echokompensation auf Veranlassung der Steuenvorrichtung, wobei dieses Veranlassung auf die Benachrichtigung des Unterschreitens des Schwellenwertes hin erfolgt.

## Claims

1. Method for switching off an echo compensation for a useful data connection in a packet network (IPNET), should the packet delay time be reduced, in which
- a threshold value is used for the useful data transmission time or the delay time of the useful data that represents a lower limit for switching off the echo compensation,
- the useful data transmission time of the changed useful data connection is triggered on a change to the useful data connection,
- if echo compensation is switched on a check is made to determine whether or not the useful data transmission time of the changed useful data connection falls below the threshold value, and
- the echo compensation is switched off by means of a control device (MGC) and a gateway (MG), in which case
-- the threshold value for the useful data transmission time which represents a lower limit for switching on the echo compensation is sent from the control device (MGC) to the gateway (MG),
-- when the gateway (MG) changes the useful data connection, the useful data transmission time of the changed useful data connection is determined,
-- if echo compensation is switched on, the gateway (MG) checks whether or not the useful data transmission time of the changed useful data connection falls below the threshold value,
-- the gateway (MG) informs the control device (MGC) that the useful data transmission time falls below the threshold value, and
-- the control device (MGC) activates the switching off of the echo compensation on receiving information that the useful data is falling below the threshold value.

2. Method in accordance with claim 2,
**characterised in that**
- from the control device (MGC) to the gateway (MG), as part of the transfer of the threshold value by means of the notification request instruction of the MGCP protocol, the gateway (MG) is made to inform the control device (MGC) when there is a change in the useful data connection which causes it to fall below the threshold value.

3. Method in accordance with claim 1 or 2,
**characterised in that**
- the threshold value is sent by means of an event newly introduced for the MGCP protocol in the RTP package of the MGCP protocol.

4. Method in accordance with one of the preceding claims,
**characterised in that**
- useful data transmission times are determined by using the round trips of the messages.

5. Method in accordance with one of the preceding Claims 1 to 4, **characterised in that**
- the control device (MGC) switches off the echo compensation on receiving information that the useful data transmission has fallen below the threshold value **in that** the control device (MGC) switches off the echo compensation via the gateway (MG) by sending the MGCP message MDCX to the gateway (MG).

6. Method in accordance with one of the preceding claims,
**characterised in that**
- where an echo compensation is switched off in the area of responsibility of a control entity, an NRM message is sent to a control entity for switching off the echo compensation, and
- by sending the NRM message, the control entity switches off an echo compensation.

7. Method in accordance with one of the preceding claims,
**characterised in that**
- the packet network (IPNET) is an IP network or an ATM Asynchronous Transfer Mode network.

8. Gateway (MG) for carrying out a method in accordance with one of the preceding claims
- with means to determine the useful data transmission times in the packet network (IPNET) and
- with a program structure to compare the useful data transmission times determined with a threshold value transferred from a control device (MGC) which represents a lower limit for switching on the echo compensation,
- with means for notifying the control device about an undershoot of the threshold value,
- and means for switching off the echo compensation at the instigation of the control device, with the control device taking this action as a result of being notified about of an undershoot of the threshold value.

## Revendications

1. Procédé pour la désactivation d'une compensation d'écho pour une connexion de données utiles dans un réseau à commutation par paquets (IPNET) dans le cas d'une réduction du temps de propagation des paquets, dans lequel
- une valeur seuil pour le temps de transmission de données utiles est utilisée, laquelle représente une limite inférieure pour la désactivation de la compensation d'écho,
- en cas de modification de la connexion de données utiles, la détermination du temps de transmission de données utiles de la connexion modifiée de données utiles est déclenchée,
- la compensation d'écho étant enclenchée, il est vérifié si le temps de transmission de données utiles de la connexion modifiée de données utiles dépasse la valeur seuil par le bas et
- en cas d'un dépassement de la valeur seuil par le bas, la désactivation de la compensation d'écho est provoquée au moyen d'un dispositif de commande (MGC) et d'une gateway (MG),
-- la valeur seuil pour le temps de transmission de données utiles, laquelle représente une limite inférieure pour l'enclenchement de la compensation d'écho, étant transmise du dispositif de commande (MGC) à la gateway (MG),
-- en cas d'une modification de la connexion de données utiles, la détermination du temps de transmission de données utiles de la connexion modifiée de données utiles étant provoquée la gateway (MG),
-- en cas de compensation d'écho enclenchée, la gateway (MG) vérifiant si le temps de transmission de données utiles de la connexion modifiée de données utiles dépasse la valeur seuil par le bas,
-- le dispositif de commande (MGC) étant informé par la gateway (MG) d'un dépassement de la valeur seuil par le bas et
-- le dispositif de commande (MGC) provoquant la désactivation de la compensation d'écho suite à l'information concernant le dépassement de la valeur seuil par le bas.

2. Procédé selon la revendication 1,
**caractérisé en ce**
- **que**, dans le cadre de la transmission à la gateway de la valeur seuil au moyen de l'instruction «Notification Request» du protocole MGCP, le dispositif de commande (MGC) provoque que la gateway (MG) informe le dispositif de commande (MGC) en cas de modification de la connexion de données utiles qui entraîne un dépassement de la valeur seuil par le bas.

3. Procédé selon la revendication 1 ou 2,
**caractérisé en ce**
- **que** la transmission de la valeur seuil est opérée dans le package RTP du protocole MGCP au moyen d'un événement nouvellement introduit pour le protocole MGCP.

4. Procédé selon l'une des revendications précédentes,
**caractérisé en ce**
- **que** des temps de transmission de données utiles sont déterminés à l'aide des temps de propagation en boucle de messages.

5. Procédé selon l'une des revendications précédentes 1 à 4,
**caractérisé en ce**
- **que**, suite à l'information concernant le dépassement de la valeur seuil par le bas, le dispositif de commande (MGC) provoque la désactivation de la compensation d'écho par le fait que le dispositif de commande (MGC) provoque la désactivation de la compensation d'écho par la gateway (MG) par envoi du message MGCP MDCX à la gateway (MG).

6. Procédé selon l'une des revendications précédentes,
**caractérisé en ce**
- **qu'**en cas de désactivation d'une compensation d'écho dans la zone de compétence d'une instance de contrôle pour la désactivation de la compensation d'écho, un message NRM est envoyé à une instance de contrôle et
- **que** la désactivation d'une compensation d'écho par l'instance de contrôle est provoquée par l'émission du message NRM.

7. Procédé selon l'une des revendications précédentes,
**caractérisé en ce**
- **que** le réseau à commutation par paquets (IPNET) est un réseau IP ou un réseau ATM asynchronous transfer mode.

8. Gateway (MG) pour exécuter un procédé selon l'une des revendications précédentes,
comprenant
- des moyens pour déterminer des temps de transmission de données utiles dans le réseau à commutation par paquets (IPNET) et
- une structure de programme pour comparer des temps déterminés de transmission de données utiles avec une valeur seuil transmise par un dispositif de commande (MGC), laquelle représente une limite inférieure pour l'enclenchement de la compensation d'écho;
- des moyens pour informer le dispositif de commande d'un dépassement de la valeur seuil par le bas;
- des moyens pour désactiver la compensation d'écho sur instruction du dispositif de commande, cette instruction intervenant suite à l'information concernant le dépassement de la valeur seuil par le bas.
